**Europäisches Patentamt**

**European Patent Office**

**Office européen des brevets**

(11) Veröffentlichungsnummer: **0 154 126 B1**

(12) **EUROPÄISCHE PATENTSCHRIFT**

(45) Veröffentlichungstag der Patentschrift: **08.08.90**

(51) Int. Cl.⁵: **H 04 N 7/137**

(21) Anmeldenummer: **85100478.8**

(22) Anmeldetag: **18.01.85**

(54) Verfahren zur Bestimmung des Displacements von Bildsequenzen und Anordnung sowie Anwendungen hierzu.

(30) Priorität: **05.03.84 DE 3408016**

(43) Veröffentlichungstag der Anmeldung:
**11.09.85 Patentblatt 85/37**

(45) Bekanntmachung des Hinweises auf die
Patenterteilung:
**08.08.90 Patentblatt 90/32**

(84) Benannte Vertragsstaaten:
**DE FR GB IT NL**

(56) Entgegenhaltungen:
**DE-B-2 062 922**
**US-A-4 077 053**
**US-A-4 383 272**

**"Image sequence processing and dynamic scene analysis", ed. T.S. Huang, 1983 Springer-Verlag Berlin, Heidelberg, New York, Tokyo Seiten 215-234**

(73) Patentinhaber: **ANT Nachrichtentechnik GmbH**
**Gerberstrasse 33**
**D-7150 Backnang (DE)**

(72) Erfinder: **Bergmann, Hans C. Dr.**
**Meisenstrasse 12**
**D-6078 Neu-Isenburg 2 (DE)**
Erfinder: **Musmann, Hans-Georg, Prof. Dr.**
**Heckenrosenweg 24**
**D-3320 Salzgitter-Bad (DE)**

# EP 0 154 126 B1

**Beschreibung**

Die Erfindung betrifft ein Verfahren gemäß dem Oberbegriff des Patentanspruches 1, eine Anordnung zur Bestimmung von Displacements nach dem Oberbegriff des Patentanspruches 2 sowie Anwendungen. Ein Verfahren nach dem Oberbegriff des Patentanspruches 1 ist bekannt aus "Image Sequence Processing and Dynamic Scene Analysis", ed. T. S. Huang, Springer Verlag Berlin, Heidelberg 1983, Seiten 215 bis 234. Eine Anordnung zur Bestimmung von Displacements nach dem Oberbegriff des Patentanspruchs 2 ist aus der US—A—4,383,272 bekannt.

Zur Displacement-Bestimmung in Fernsehsignalen unter Echtzeitbedingungen sind verschiedene rekursive und nichtrekursive Schätzverfahren veröffentlicht worden.

Nichtrekursive Verfahren sind beispielsweise aus "IEEE Trans. on Pattern Analysis and Machine Intelligence, Vol. 4, Nr. 1, Jan. 1982, Seiten 2 bis 10 bekannt. Sie besitzen den Vorzug einer relativ einfachen Hardware-Realisierung, arbeiten jedoch nur bei Displacements bis zu 2 pel/frame mit genügender Schätzgenauigkeit (Image Sequence Processing and Dynamic Scene Analysis, ed. T. S. Huang, Seite 222). Wegen der in natürlichen Fernsehbildsequenzen auftretenden Displacements von über 10 pel/frame sind diese Verfahren nur beschränkt anwendbar.

Rekursiven Schätzverfahren liegt im allgemeinen ein Optimierungskriterium zugrunde, wobei zum jeweils vorangegangenen Schätzwert eine Korrektur addiert wird, so daß die Optimierungsgröße schrittweise dem Optimum angenähert wird. Eine Untersuchung bekannter rekursiver Displacement-Schätzverfahren hat gezeigt, daß diese bei mittleren Displacements bis etwa 4 pel/frame genügend schnell konvergieren, d.h. bereits nach wenigen Rekursionsschritten. Für größere Displacements bis zu 12 pel/frame werden allerdings fünf und mehr Rekursionsschritte zum Einschwingen benötigt.

Die Anzahl der Rekursionsschritte ist jedoch hinsichtlich einer Echtzeitschätzung auf ein bis zwei Schritte begrenzt, so daß für die Schätzung großer Displacements diese Verfahren ebenfalls nur beschränkt anwendbar sind.

Aus "Image Sequence Processing and Dynamic Scene Analysis", s.o. ist es insbesondere aus Seite 229 bekannt, bei einem rekursiven Verfahren zur Displacementbestimmung für den Korrekturwert den Quotienten aus der 1. und 2. Ableitung der Kreuzkorrelationfunktion zwischen der gerade empfangenen und einer zuvor empfangenen Bildsequenz zu verwenden.

Aus US—A—4,383,272 ist eine Anordnung zur Interpolation ausgelassener Fernsehbilder aus übertragenen Fernsehbildern bekannt. Das Displacement wird dort rekursiv bestimmt. Aus zwei nacheinander übertragenen Bildsequenzen wird dort eine Differenz gebildet. Zur Displacement-Schätzung wird als Korrekturwert der Gradient des mittleren quadratischen Fehlers zweiter aufeinanderfolgender Bilder herangezogen. Um bei der rekursiven Schätzung das zuvor ermittelte Displacement mit dem gerade ermittelten Displacement verknüpfen zu können, ist ein Verzögerungsspeicher vorgesehen.

Aufgabe der Erfindung ist es, ein Verfahren zur Bestimmung des Displacements anzugeben, welches schon nach wenigen Rekursionsschritten einen genauen Schätzwert liefert, also eine sehr große Konvergenzgeschwindigkeit aufweist, wobei vorausgesetzt sein soll, daß der Konvergenzbereich zumindest ebenso groß ist wie bei den bereits bekannten Verfahren. Des weiteren soll eine Anordnung zum Durchführen einer Displacement-Bestimmung angegeben werden sowie vorteilhafte Anwendungen. Diese Aufgabe wird bezüglich des Verfahrens durch die kennzeichnenden Merkmale des Patentanspruchs 1 gelöst, bezüglich der Anordnung durch die kennzeichnenden Merkmale des Patentanspruchs 2 und bezüglich der Anwendungen durch die Patentansprüche 3, 4, und 5.

Vorteilhaft bei dem erfindungsgemäßen Verfahren ist insbesondere die bessere und schnellere Approximation eines Schätzwertes für das Displacement gegenüber jenen Verfahren, die Kreuz- oder Autokorrelationsfunktionen allein auswerten. Durch die schnelle Approximation ist das Verfahren für eine Echtzeitschätzung besonders geeignet.

Anhand der Zeichnungen wird die Erfindung nun näher erläutert. Es zeigen:

Fig. 1 die eindimensionalen Auto- bzw. Kreuzkorrelationsfunktionen der Luminanzsignale zweier aufeinanderfolgender Bilder,

Fig. 2 eine Darstellung der abgeleiteten Korrelationsfunktionen und der Displacement-Schätzwerte,

Fig. 3 ein Blockschaltbild für eine Anordnung zum Durchführen des Verfahrens nach der Erfindung,

Fig. 4 ein Blockschaltbild zur Beseitigung des Bilflimmerns beim Standard-Fernsehen.

Einige Grundlagen und Voraussetzungen zum besseren Verständnis der nachfolgenden Zusammenhänge werden nun vorab erläutert. Betrachtet wird ein bewegtes Objekt in einer Fernsehszene. Mit $I_k(x,y)$ sei das zweidimensionale Helligkeitssignal eines gerade übertragenen Bildes bezeichnet und mit $I_{k-1}(x,y)$ des zeitlich gerade zuvor übertragenen Bildes. k gibt somit den Parameter für die Aufeinanderfolge der Bilder an. Die Korrelation R zwischen diesen beiden Signalen ergibt sich dann in Abhängigkeit vom Displacement $d_x$ und $d_y$ — "örtlicher Signalversatz zwischen diesen beiden Bildern in x- und y-Richtung" — zu:

$$R_{I_k I_{k-1}}(d_x,d_y) = \int\limits_{-\infty}^{+\infty} \int\limits_{-\infty}^{+\infty} I_k(x,y)\cdot I_{k-1}(x - d_x, y - d_y)dx\,dy \qquad (1)$$

2

Anhand der Rekursionsformeln

$$d_{x(i)} = d_{x(i-1)} + d_x \qquad (2)$$

$$d_{y(i)} = d_{y(i-1)} + d_y \qquad (3)$$

kann das Displacement im i-ten Rekursionsschritt bestimmt werden.

Das Displacement in horizontaler Richtung, x-Richtung, läßt sich mittels der Korrelationsbeziehung folgendermaßen ausdrücken:

$$d_x = \frac{R_{I_{k-1}I_{k-1}}(O,O) + R_{I_kI_{k-1}}(d_x,d_y)_{(i-1)} - R_{I_kI_{k-1}}(d_x,d_y)_{(i-1)}}{R_{I_kI_k}(O,O)} \qquad (4)$$

$$\frac{- R_{I_kI_k}(O,O)}{+ R_{I_kI_{k-1}}(d_x,d_y)_{(i-1)}}$$

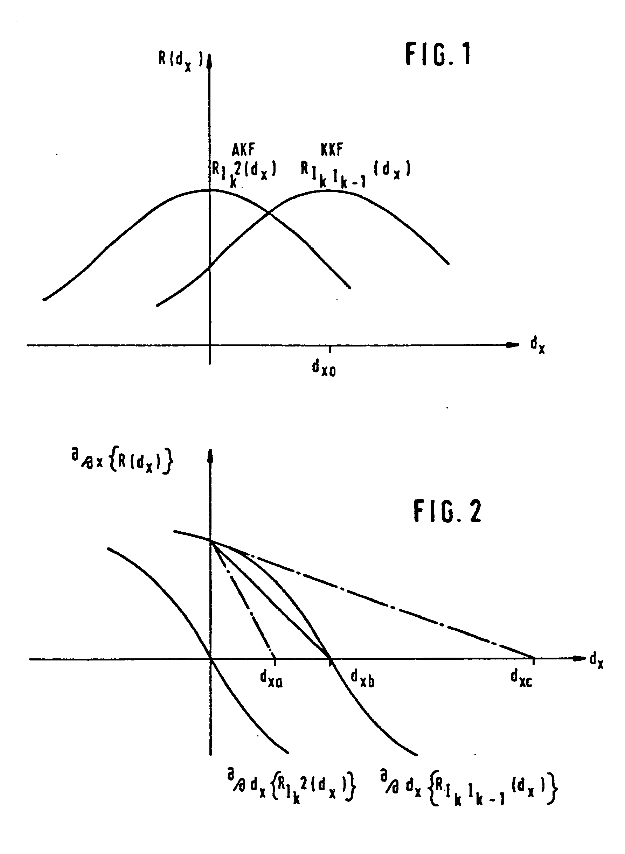

Mit der Abkürzung I′ für die partielle Ableitung $\partial/\partial_x I$. Im Nenner dieses Ausdruckes erscheint nur die Summe aus der 1. Ableitung der Autokorrelationsfunktion von $I_k$ im Punkte (0,0), und der 1. Ableitung der Kreuzkorrelationsfunktion von $I_k$ und $I_{k-1}$ im Punkte $(d_x, d_y)$, also die Stellen der Korrelationsspitzenwerte der Autokorrelationsfunktion (AKF) und der Kreuzkorrelationsfunktion (KKF). Fig. 1 zeigt diese Autokorrelations- und Kreuzkorrelationsfunktion der verschobenen Luminanzsignale anhand eines eindimensionalen Beispiels. Der Spitzenwert der AKF $(R_{I_k}^2(d_x))$ liegt bei $d_x = 0$ und der Spitzenwert der KKF $R_{I_k I_{k-1}}(d_x)$ bei $d_x = d_{x0}$.

Für stationäre Signale gilt:

$$R_{I_{k-1}I_{k-1}}(O,O) = R_{I_kI_k}(O,O). \qquad (5)$$

Ferner lassen sich die Reihenfolge von Differentiation und Integration bei stationären Verbundprozessen $I'_k$ und $I_{k-1}$ vertauschen. Mit Umformungen erhält man

$$R_{I_kI_{k-1}}(d_x, d_y) = \partial/\partial_{d_x} R_{I_kI_{k-1}}(d_x, d_y) \qquad (6)$$

$$R_{I_kI_{k-1}}(d_x, d_y) = -\partial/\partial_{d_x} R_{I_kI_{k-1}}(d_x, d_y) \qquad (7)$$

$$R_{I'_kI'_{k-1}}(\partial_x, \partial_y) = -\partial^2/\partial_{d_x}^2 R_{I_kI_{k-1}}(d_x, d_y) \qquad (8)$$

und damit für Gleichung (4)

$$d_x = -\frac{2\partial/\partial_{d_x} R_{I_kI_{k-1}}(d_x,d_y)_{(i-1)}}{\partial^2/\partial_{d_x}^2 \{R_{I_kI_k}(O,O) + R_{I_kI_{k-1}}(d_x,d_y)_{(i-1)}\}} \qquad (9)$$

In diesem Fall erfolgt mit Gleichung (9) die lokale Bestimmung des Maximums der Kreuzkorrelationsfunktion der verschobenen Bildsignale $I_{k-1}(x,y)$ und $I_k(x,y)$. Fig. 2 zeigt in Verbindung mit Fig. 1 diesen Zusammenhang wiederum für eindimensionale Funktionen.

Die Autokorrelationsfunktion (AKF) $R_{I_kI_k}(d_x)$ und Kreuzkorrelationsfunktion (KKF) $R_{I_kI_{k-1}}(d_x)$ der Bildsignale stimmen in ihren Formen näherungsweise überein und sind in Richtung $d_x$ um das Displacement $d_{xo}$ gegeneinander verschoben. Als Anfangswert für das rekursive Schätzverfahren diene $d_{x(i-1)} = 0$. Der erste Schätzwert $d_{xb}$ wird gemäß (9) berechnet aus dem Quotienten der 1. Ableitung der KKF im Punkt (0,0) und den 2. Ableitungen von AKF und KKF, jeweils gewichtet mit dem Faktor 1/2. Durch die Mittelung von beiden 2. Ableitungen in (9) approximiert der Schätzwert das tatsächliche Displacement $d_{xo}$ besser als die bekannten Verfahren, bei denen der Divisor entweder nur die 2. Ableitung der KKF oder der AKF enthält. In diesen Fällen erhält man die Schätzwerte $d_{xa}$ beziehungsweise $d_{xc}$, die in Fig. 2 gestrichelt dargestellt sind.

Bei einem Vergleich mit bekannten Verfahren zur Displacement-Bestimmung zeigte sich am Beispiel einer speziellen KKF, daß das neue Displacement-Schätzverfahren um den Faktor 4 schneller als das Newton-Verfahren (International Conference on Electronic Image Processing, July 1982, University of York, Großbritannien; "Displacement Estimation based on the Correlation of Image Segments") und um den Faktor 2 schneller als ein von Cafforio und Rocca (IEEE Transact. on Information Theory, Vol. IT-22, No. 9, Sept. 1976, Seiten 573 bis 579) vorgeschlagenes Verfahren konvergiert. Die experimentellen Untersuchungen haben des weiteren ergeben, daß das neue Schätzverfahren auch bei großen Displacements um 10 pel/frame bereits nach 2 Rekursionsschritten eine für die Interpolation von Fernsehbildsequenzen ausreichende Genauigkeit erreicht.

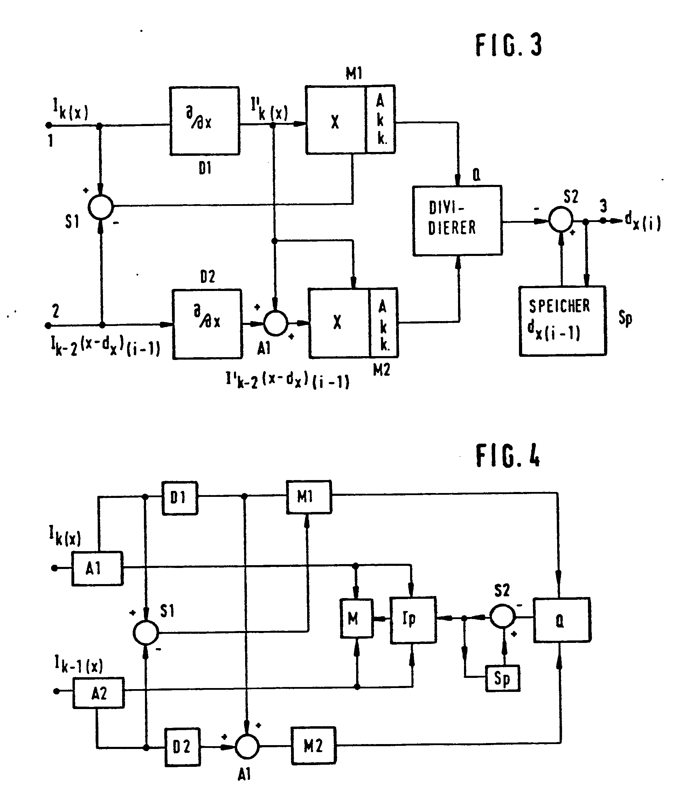

Anhand des Blockschaltbildes gemäß Fig. 3 wird nun eine Anordnung zum Durchführen des Verfahrens nach der Erfindung dargestellt. Für die Realisierung wurde dabei von folgender Beziehung zur Displacement-Bestimmung ausgegangen:

$$d_{x(i)} = d_{x(i-1)} - 2 \frac{\sum\limits_{w} [I_{k-2}(x - d_x, y - d_y)_{(i-1)} - I_{k(x,y)}] \cdot \partial/\partial x \, I_{k(x,y)}}{\sum\limits_{w} [\partial/\partial x \, I_{k-2}(x - d_x, y - d_y)_{(i-1)} + \partial/\partial x \, I_k(x,y)] \, \partial/\partial x \, I_k(x,y)} \qquad (10)$$

wobei $I_k$ und $I_{k-2}$ Luminanzen von Fernsehhalbbildern sind.

Diese Beziehung (10) ist eine modifizierte Form von Gleichung (9). Zu beachten ist, daß in Abweichung zu Gleichung (9) nicht das unmittelbar vor dem Halbbild $I_{k(x,y)}$ übertragene Halbbild $I_{k-1}(x,y)$ für die Bildung der Kreuzkorrelation mit $I_{k(x,y)}$ herangezogen wird, sondern das entsprechende Halbbild $I_{k-2}(x,y)$. Die Beziehung (10) ist eine Rekursionsformel, mit welcher sich ein neuer Schätzwert $d_{x(i)}$ immer aus dem gerade zuvor ermittelten Schätzwert $d_{x(i-1)}$ und einem Korrekturwert ergibt. Im ersten Schritt wird $d_{x(i)}$ mit $d_{x(i-1)} = 0$ ermittelt und im zweiten Schritt erfolgt die Ermittlung von $d_{x(i+1)}$ mit $d_{x(i)}$ aus dem ersten Schritt, usw. Wie aus Fig. 3 hervorgeht, wird über den Subtrahierer S1 die Differenz der den Signaleingängen 1 und 2 zugeführten Bildsequenzen $I_{k(x)}$ und $I_{k-2}(x-dx)$ (i-1) gebildet. Beide Bildsequenzen $I_{k(x)}$ und $I_{k-2}(x-d_x)_{(i-1)}$ werden über Differenzierer D1 und D2 geführt, sodaß an deren Ausgänge die 1. Ableitungen der Bildesequenzen verfügbar sind. Die Multiplizierer M1 und M2 sind zusätzlich mit einer Akkumulationseinrichtung Akk ausgestattet, mit der die multiplizierten Signale aufsummiert werden — im Ausführungsbeispiel erfolgt diese Aufsummiereung über ein Bildfenster w (vgl. Beziehung 10). Für den Multiplizierer M1 ist das dem ersten Multipliziereereingang zugeführte Signal das Ausgangssignal des Differenzierers D1 und das dem zweiten Multipliziereereingang zugeführte Signal das Ausgangssignal des Subtrahierers S1. Dem Multiplizierer M2 wird das Ausgangssignal des Differenzierers D1 sowie das Ausgangssignal eines Addierers A1 zugeführt, welcher die Ausgangssignale der beiden Differenzierer D1 und D2 verknüpft mittels des Dividierers Q, dem die Ausgangssignale von M1 und M2 zugeführt sind. Das Ergebnis der Division wird mit dem Faktor 2 gewichtet. Der aktuelle Schätzwert $d_{x(i)}$ wird mittels des Subtrahierers S2 durch Verknüpfung des beim letzten Rekursionsschritt ermittelten Schätzwertes, der im Speicher Sp abgelegt ist, und dem Korrekturwert — Ausgangssignal des Dividierers Q — gewonnen. Der Speicher Sp weist zum Einlesen des zuvor ermittelten Schätzwertes eine Verbindung zum Ausgang 3 des Subtrahierers S2 auf, der gleichzeitig den Ausgang der Anordnung darstellt. Um dafür Sorge zu tragen, daß die Signale $I_{k(x)}$ und $I_{k-2}(x-d_x)$ (i-1) zusammen auswertbar sind, ist dem Signaleingang 1' der Anordnung eine Signalverzögerungseinrichtung (nicht dargestellt) vorgeschaltet, die das Luminanzsignal $I_{k(x)}$ um die Dauer zweier Halbbilder verzögert.

Das Verfahren nach der Erfindung läßt sich vorteilhaft insbesondere zur bewegungsadaptiven Interpolation von Fernsehbildsequenzen, z.B. zur Rekonstruktion von ausgelassenen Bildsequenzen (Halbbildern) bei Übertragungskanälen mit Datenreduktion verwenden. Das Prinzip dazu beruht auf der sendeseitigen Reduktion der Bildfolgefrequenz durch Auslassen von Fernsehhalbbildern und bewegungsadaptiver Interpolation der nicht übertragenen Bilder beim Empfänger. Eine weitere vorteilhafte Verwendungsmöglichkeit besteht in der Flimmerbefreiung beim Standard-Fernsehen. Die Bildfolgefrequenz des Standard-Fernsehsignals im Monitor läßt sich dadurch erhöhen, daß aus zwei nacheinander übertragenen Bildsequenzen (Halbbildern) durch Interpolation eine zusätzliche Bildsequenz gewonnen wird, die auf dem Monitor M zwischen zwei herkömmlich dargestellte Halbbilder eingeschoben wird, wobei das interpolierte Halbbild bewegungsadaptiv unter Berücksichtigung des Displacements korrigiert wird. Das Blockschaltbild gemäß Fig. 4 zeigt eine Anordnung für eine solche Flimmerbefreiung. Mittels einer Auswerteeinrichtung A1 (Bildspeicher) für eine erste Bildsequenz (beispielsweise 1. Halbbild) und einer Auswerteeinrichtung A2 (Bildspeicher) für eine zweite Bildsequenz (beispielsweise 2. Halbbild) wird in einem Interpolator Ip eine Zwischenbildsequenz erzeugt. Dieser Interpolator Ip weist einen Steuereingang St auf, dem ein bewegungsadaptives Steuersignal zugeführt wird. Als bewegungsadaptives Steuersignal dient das Displacement, wie es mit der Anordnung nach Fig. 3 gewonnen werden kann. Der Ausgang 1' der Auswerteeinrichtung A1 entspricht dem Signaleingang 1 der Fig. 3. Entsprechendes gilt für den Ausgang 2' der Auswerteeinrichtung A2. Für die weiteren Baugruppen wie Addierer, Differenzierer, Multiplizierer, ... wurden in Fig. 4 die Bezeichnungen der Fig. 3 übernommen. Es entsteht also auf dem Monitor M zusätzlich ein interpoliertes Zwischenbild unter Berücksichtigung des Displacements. Dem Betrachter wird durch die zusätzliche Zwischenbildübertragung eine höhere Bildfrequenz angeboten, die das Bildflimmern, insbesondere bei der Wiedergabe hoher Leuchtdichten, merklich reduziert. Sichtbare Verzerrungen, z.B. an Kanten bewegter Bildteile, die ohne Berücksichtigung des Displacements auftreten würden, treten nicht mehr auf. Damit die Bilder in ihrer richtigen Zeitfolge auf dem Monitor M dargestellt werden, sind vor den Eingängen des Monitors M fallweise geeignete Verzögerungseinrichtungen notwendig.

Das Verfahren gemäß der Erfindung eignet sich besonders für Anwendungen in Verbindung mit Quellencodierungsverfahren zur Datenreduktion wie beispielsweise der DPCM Bildübertragung sowie für Anwendungen bei der Rauschunterdrückung mit Bild-zu Bild-Filtern.

**Patentansprüche**

1. Verfahren zur Bestimmung von Displacements in aufeinanderfolgend übertragenen Bildsequenzen (Fernsehhalbbilder oder -vollbilder), wobei empfangsseitig bildelelementweise Korrelationsspitzenwerte zwischen den aufeinanderfolgend übertragenen Bildsequenzen ermittelt werden, die zur Bildung von Schätzwerten für das Displacement dienen, wobei diese Schätzswerte mittels Rekursionsschritten optimiert werden, indem zu einem jeweils bestimmten Schätzwert ein Korrekturwert hinzugefügt wird, so daß ein neuer Schätzwert entsteht, und wobei der Korrekturwert aus einem Quotienten ermittelt wird, der Ableitungen der Kreuzkorrelationsfunktion zwischen einer empfangenen und einer zuvor empfangenen Bildsequenz berücksichtigt, dadurch gekennzeichnet, daß der jeweilige Divisor des Quotienten für den Korrekturwert aus der Mittelung einer Ableitung der Kreuzkorrelationsfunktion sowie einer Ableitung der Autokorrelationsfunktion der gerade empfangenen Bildsequenz gewonnen wird.

2. Anordnung zur Bestimmung von Displacements in aufeinanderfolgend übertragenen Bildsequenzen, wobei die Anordnung zwei Eingänge (1, 2) aufweist, wobei dem ersten Eingang das gerade übertragene Bild und dem zweiten Eingang ein zuvor empfangenes Bild zugeführt ist, wobei die Eingänge mit jeweils einem Eingang eines Subtrahierers (S1) verbunden sind und wobei der Ausgang der Anordnung, an dem der Schätzwert für das Displacement abnehmbar ist, mit einem Eingang eines Speichers (Sp) derart verbunden ist, daß für die Ermittlung des aktuellen Schätzwertes für das Displacement der zuvor ermittelte Schätzwert im Speicher (Sp) verfügbar wird, dadurch gekennzeichnet, daß zur Durchführung des Verfahrens nach Anspruch 1 vorgesehen ist, daß die Eingänge (1, 2) der Anordnung jeweils mit einem Differenzierer (D1, D2) verbunden sind, daß der Ausgang des ersten Differenzierers (D1), der das gerade empfangene Bild auswertet, mit dem ersten Multipliziereingang eines ersten Multiplizierers mit Akkumulationeinrichtung (M1) und mit einem ersten Eingang eines Addierers (A1) verbunden ist, daß der Ausgang des zweiten Differenzierers (D2) mit dem zweiten Eingang des Addierers (A1) verbunden ist, daß der Ausgang des Subtrahierers (S1) an den zweiten Multipliziereingang des ersten Multiplizierers (M1) geführt ist, daß ein zweiter Multiplizierer mit Akkumulationseinrichtung (M2) vorgesehen ist, dessen erster Multiplizierereingang mit dem Ausgang des Addierers (A1) und dessen zweiter Multiplizierereingang mit dem Ausgang des ersten Differenzierers (D1) verbunden ist, daß die Ausgänge der Multiplizierer und Akkumulationseinrichtungen (M1, M2) jeweils an die Eingänge eines Dividierers (Q) angeschlossen sind, daß ein weiterer Subtrahierer (S2) vorgesehen ist, dessen Subtrahendeneingang mit dem Ausgang des Dividierers (Q) und dessen Minuendeneingang mit einem Ausgang des Speichers (Sp) beschaltet ist, und daß der Ausgang des Subtrahierers (S2) den Ausgang der Anordnung bildet.

3. Anwendung des Verfahrens nach Anspruch 1 zur bewegungsadaptiven Interpolation von Zwischenbildsequenzen für die Rekonstruktion von bei der Übertragung ausgelassener Bildsequenzen in Abhängigkeit des Displacements.

4. Anwendung des Verfahrens nach Anspruch 1 zur Flimmerbefreiung bei der Standard-Fernsehübertragung, wobei für die Wiedergabe aus den übertragenen Bildsequenzen durch Interpolation zusätzliche Bildsequenzen generiert werden und die Interpolation in Abhängigkeit des Displacements erfolgt.

5. Anwendung des Verfahrens nach Anspruch 1 zur Rauschunterdrückung durch Bild- zu Bild-Filterung.

**Revendications**

1. Procédé pour déterminer des déplacements dans des séquences d'images (trames ou images de télévision) transmises successivement, dans lequel, côté réception, des valeurs maximales de corrélation sont établies, élément d'image par élément d'image, entre les séquences d'images transmises successivement, valeurs maximales qui servent à l'élaboration de valeurs estimatives pour le déplacement, dans lequel ces valeurs estimatives sont optimisées au moyen de pas de récurrence, par addition d'une valeur correctrice à une valeur estimative qui vient d'être établie, de sorte qu'il se forme une nouvelle valeur estimative, et dans lequel la valeur correctrice est établie à partir d'un quotient qui tient compte dérivées de la fonction de corrélation croisée entre une séquence d'image reçue à ce moment et une séquence d'image reçue précédemment, caractérisé en ce que la diviseur du quotient pour la valeur correctrice est tiré de la détermination de la valeur moyenne d'une dérivée de la fonction de corrélation croisée, ainsi qu'une d'une dérivée de la fonction d'autocorrélation de la séquence d'image reçue à ce moment.

2. Dispositif pour déterminer des déplacements dans des séquences d'images transmises successivement, dispositif qui présente deux entrées (1, 2), à la première desquelles est appliquée l'image transmise à ce moment et à la seconde entrée desquelles est appliquée une image reçue précédemment, dans lequel les entrées sont connectées chacune à une entrée d'un soustracteur (S1) et dans lequel la sortie du dispositif, sur laquelle peut être prélevée la valeur estimative pour le déplacement, est reliée à une entrée d'une mémoire (Sp) de manière que, pour l'établissement de la valeur estimative actuelle du déplacement, la valeur estimative établie précédemment devienne disponible dans la mémoire (Sp), caractérisé en ce que, pour la mise en oeuvre du procédé selon la revendication 1, les entrées (1, 2) du dispositif sont connectées chacune à un différenciateur (D1, D2), la sortie du premier différenciateur (D1), lequel exploite l'image reçue à ce moment, est reliée à la première entrée de multiplication d'un premier multiplicateur (M1) présentant un dispositif d'accumulation, ainsi qu'à une première entrée d'un additionneur (A1), la sortie du second différenciateur (D2) est reliée à la seconde entrée de l'additionneur (A1), la sortie du soustracteur (S1) est reliée à la seconde entrée de multiplication du premier multiplicateur (M1), un second multiplicateur (M2) est prévu, muni également d'un dispositif d'accumulation, dont la première entrée de multiplication est reliée à la sortie de l'additionneur (A1) et dont la seconde entrée de multiplication est reliée à la sortie du premier différenciateur (D1), les sorties des multiplicateurs et dispositifs d'accumulation (M1, M2) étant connectées aux entrées d'un diviseur (Q), un soustracteur supplémentaire (S2) est prévu et est relié par son entrée recevant le terme à soustraire à la sortie du diviseur (Q) et par son entrée recevant le terme dont on soustrait à une sortie de la mémoire (Sp), et la sortie du soustracteur (S2) forme la sortie du dispositif.

3. Application du procédé selon la revendication 1, pour l'interpolation adaptative fonction des mouvements, de séquences d'images intermédiaires en vue de la reconstruction, en fonction du déplacement, de séquences d'images supprimées lors de la transmission.

4. Application du procédé selon la revendication 1, pour l'élimination du scintillement dans la transmission d'images de télévision standard, dans laquelle, pour la reproduction, des séquences d'images supplémentaires sont générées par interpolation à partir des séquences d'images transmises et dans laquelle l'interpolation s'opère en fonction du déplacement.

5. Application du procédé selon la revendication 1, pour la suppression du bruit par filtrage image à image.

## Claims

1. A method for determining displacement in successively transmitted image sequences (television fields or frames), with pixel-by-pixel determination, at the receiving end, of peak correlation values between successively transmitted image sequences for the formation of estimated displacement values and with said estimated values being optimised by means of recursion steps in that a correction value is added to a respective, determined estimated value so that a new estimated value results, and the correction value being determined from a quotient which considers derivatives of the cross-correlation function between a received and a previously received image sequence, characterised in that the respective divisor of the quotient for the correction value is formed from the average of a derivative of the cross-correlation function and a derivative of the autocorrelation function of the momentarily received image sequence.

2. An arrangement for determining displacement in successively transmitted image sequences, wherein the arrangement comprises two inputs (1, 2), with the first input receiving the momentarily transmitted image and the second input receiving a previously received image, said inputs each being connected with one input of a subtracter (S1); and the output of the arrangement at which the estimated displacement values is available is connected with an input of a memory (Sp) in such a manner that the previously determined estimated value is available in the memory (Sp) for the determination of the actual estimated value for displacement, characterised in that, for implementing the method defined in claim 1, the inputs (1, 2) of the arrangement are each connected with a differentiator (D1, D2); the output of the first differentiator (D1) which evaluates the momentarily received image is connected with the first multiplier input of a first multiplier equipped with an accumulation device (M1) and with a first input of an adder (A1); the output of the second differentiator (D2) is connected with the second input of the adder (A1); the ouptut of the subtracter (S1) is connected with the second multiplier input of the first multiplier (M1); a second multiplier equipped with an accumulation device (M2) is provided whose first multiplier input is connected with the output of the adder (A1) and whose second multiplier input is connected with the output of the first differentiator (D1); the outputs of the multipliers and accumulation devices (M1, M2) are each connected with an input of a divider (Q); a further substracter (S2) is provided whose subtrahend input is connected with the output of the divider (Q) and whose minuend input is connected with one output of the memory (Sp); and the output of the subtracter (S2) constitutes the output of the arrangement.

3. Use of the method defined in claim 1 for the motion adaptive interpolation of intermediate image sequences for the reconstruction, in dependence of displacement, of image sequences omitted during the transmission.

4. Use of the method defined in claim 1 for the removal of flicker in standard television transmission, wherein additional image sequences are generated for playback from the transmitted image sequences by interpolation and the interpolation takes place as a function of the displacement.

5. Use of the method defined in claim 1 for the suppression of noise by means of image-to-image filtering.

FIG.1

FIG.2

# FIG. 3

# FIG. 4